# EUROPÄISCHE PATENTSCHRIFT

(11) **EP 1 238 487 B1**
(45) Veröffentlichungstag und Bekanntmachung des Hinweises auf die Patenterteilung: **14.01.2004**
(21) Anmeldenummer: 00987021.3
(22) Anmeldetag: 25.10.2000
(51) Int. Cl.: H04L 1/00

(54) **VERFAHREN ZUM BETREIBEN EINES MOBILFUNKNETZES**
METHOD FOR OPERATING A MOBILE RADIO NETWORK
PROCEDE D'EXPLOITATION D'UN RESEAU DE TELEPHONIE MOBILE

(30) Priorität: 04.12.1999 DE 19958510
(43) Veröffentlichungstag der Anmeldung: 11.09.2002
(60) Teilanmeldung: 03026333.9
(73) Patentinhaber: ROBERT BOSCH GMBH, 70442 Stuttgart (DE)
(72) Erfinder: HANS, Martin, 31141 Hildesheim (DE); KOWALEWSKI, Frank, 38228 Salzgitter (DE); LAUMEN, Josef, 31141 Hildesheim (DE); SCHMIDT, Gunnar, 38304 Wolfenbuettel (DE); BAER, Siegfried, 75179 Pforzheim (DE); BECKMANN, Mark, 38102 Braunschweig (DE)
(86) Internationale Anmeldenummer: PCT/DE2000/003757
(87) Internationale Veröffentlichungsnummer: WO 2001/041349

(56) Entgegenhaltungen:
- FR-A- 2 769 447
- US-A- 5 182 753
- AIKAWA S ET AL: "IEEE INTERNATIONAL CONFERENCE ON COMMUNICATIONS (ICC),US,NEW YORK, IEEE" IEEE INTERNATIONAL CONFERENCE ON COMMUNICATIONS (ICC),US,NEW YORK, IEEE, 23. Juni 1996 (1996-06-23), Seiten 454-458, XP000625714 ISBN: 0-7803-3251-2

## Beschreibung

### Stand der Technik

Die Erfindung geht von einem Verfahren zum Betreiben eines Mobilfunknetzes nach der Gattung des Hauptanspruchs aus.

Aus der DE 198 47 679 ist bereits ein Verfahren zum Betreiben eines Mobilfunknetzes bekannt, bei dem Nutzdaten in Nutzdatenpaketen übertragen werden. Dabei sind den Nutzdatenpaketen jeweils Kontrolldaten in Form mindestens einer Kopfinformation zugeordnet, die für das Weiterleiten der Nutzdaten im Mobilfunknetz notwendig sind.

Aus der Druckschrift "Forward Error Correction Schemes For Wireless ATM Systems", Aikawa S. et al., IEEE International Conference on Communications (ICC), US, New York, IEEE 23. Juni 1996 ist ein Verfahren zum Betreiben eines Mobilfunknetzes bekannt, bei dem Nutzdaten in Nutzdatenpaketen übertragen werden und den Nutzdatenpaketen jeweils mindestens eine Kopfinformation mit Kontrolldaten für das Weiterleiten der Nutzdatenpakete im Mobilfunknetz zugeordnet wird, wobei die Kontrolldaten und die Nutzdaten mit unterschiedlichem Fehlerschutz übertragen werden. Aus der Druckschrift "General Packet Radio Service (GPRS); Mobile Station (MS)-Servicing GPRS Support Note (SGSN); Sub-Network Dependend Convergence Protocoll (SNDCP), ETSI, 1998 ist es bekannt, daß den Datenpaketen eine Zuordnungsinformation vorangestellt wird, die dem Empfänger die Sende-Reihenfolge der Pakete mitteilt und so eine Korrektur der Empfangs-Reihenfolge ermöglicht. Dabei ist jedoch die Nutzung verschiedener Funkkanäle für die Übertragung von Daten einer Applikation nicht vorgesehen.

### Vorteile der Erfindung

Das erfindungsgemäße Verfahren zum Betreiben eines Mobilfunknetzes mit den Merkmalen des Hauptanspruchs hat demgegenüber den Vorteil, daß die Kontrolldaten und die Nutzdaten mit unterschiedlichem Fehlerschutz übertragen werden. Auf diese Weise kann der unterschiedliche Fehlerschutz für die Kontrolldaten und die Nutzdaten besonders einfach dadurch erzielt werden, indem die Nutzdaten und die diesen zugeordneten Kontrolldaten über verschiedene Verbindungen mit unterschiedlicher Übertragungsqualität übertragen werden.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß die Kontrolldaten komprimiert übertragen werden, wobei als Kompressionsverfahren eine Intercodierung verwendet wird, bei der im Sender und Empfänger die Kontrolldaten des zuletzt übertragenen Nutzdatenpakets gespeichert werden und für das nachfolgend zu übertragende Nutzdatenpaket nur diejenigen Kontrolldaten übertragen werden, die sich im Vergleich zu den Kontrolldaten des zuletzt übertragenen Nutzdatenpaketes geändert haben. Auf diese Weise kann auch für die Übertragung der Kontrolldaten Übertragungskapazität eingespart werden.

Ein weiterer Vorteil ergibt sich dann, wenn der Fehlerschutz für die Kontrolldaten höher gewählt wird als für die Nutzdaten. Auf diese Weise kann eine fehlerfreie Weiterleitung der Nutzdatenpakete im Mobilfunknetz und insbesondere bei Intercodierung der Kontrolldaten eine Eliminierung unerkannter Übertragungsfehler bei der Kontrolldatenübertragung für aufeinanderfolgende Nutzdatenpakete sichergestellt werden. Dabei können die Nutzdaten mit einem geringeren Fehlerschutz übertragen werden als die Kontrolldaten, da sich Übertragungsfehler bei der Übertragung der Nutzdaten nicht in dem Maße auswirken, wie Übertragungsfehler bei der Übertragung der Kontrolldaten und beispielsweise keinen Einfluß auf die Weiterleitung der Datenpakete im Mobilfunknetz haben. Durch die Differenzierung des Fehlerschutzes für die Übertragung der Kontrolldaten und der Nutzdaten läßt sich der Fehlerschutz jeweils an die für die Übertragung der Kontroll- und der Nutzdaten erforderliche Übertragungssicherheit anpassen, um Übertragungsbandbreite einzusparen. Die Nutzdaten müssen dabei nicht mit demselben Fehlerschutz übertragen werden wie die Kontrolldaten.

Ein weiterer Vorteil besteht darin, daß der Fehlerschutz für die zu sendenden Kontrolldaten in einer Protokollschicht unterhalb der Konvergenzprotokollschicht durchgeführt wird. Je weiter unten der Fehlerschutz innerhalb der Protokollschichtenfolge durchgeführt wird, umso besser kann der Fehlerschutz an die eigentliche physikalische Funkverbindung angepaßt werden.

### Zeichnung

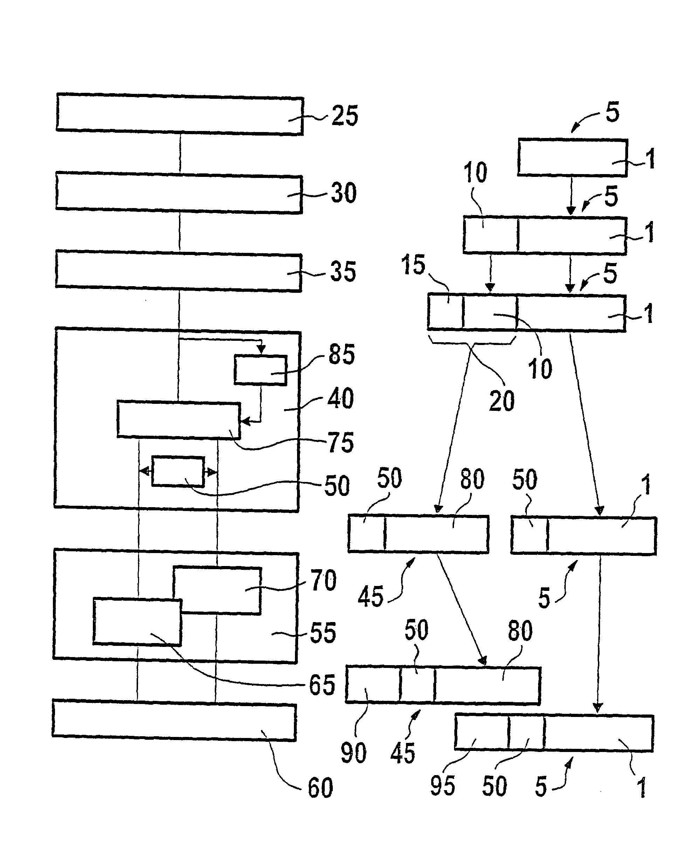

Ein Ausführungsbeispiel der Erfindung ist in der Zeichnung dargestellt und in der nachfolgenden Beschreibung näher erläutert. Es zeigt die einzige Figur eine Protokollschichtenfolge für die Bildung eines zu versendenden Kontrolldatenpaketes und eines zu versendenden Nutzdatenpaketes.

### Beschreibung des Ausführungsbeispiels

Die Funktionalitäten eines Mobilfunksystems, beispielsweise nach dem UMTS-Standard (Universal Mobile Telecommunication System) oder nach dem GSM-Standard (Global System for Mobile Communications) werden in Schichten aufgeteilt und innerhalb der Schichten werden verschiedene Protokolle spezifiziert, die den höheren Schichten jeweils Dienste zur Verfügung stellen und die von unterhalb liegenden Schichten angebotene Dienste nutzen. Jedes Protokoll existiert dabei innerhalb des Mobilfunksystems bzw. des Mobilfunknetzes mindestens zwei Mal, nämlich in mindestens zwei Einheiten, wobei die Einheiten jeweils in der gleichen Schicht liegen und einerseits zu einem Sender und andererseits zu einem Empfänger gehören. Im folgenden wird die Erzeugung von Nutzdatenpaketen und Kontrolldatenpaketen in einem Sender des Mobilfunknetzes beschrieben. Nutzdaten 1, die von einer Anwendung in einer Anwendungsprotokollschicht 25 gemäß der Figur in einem Nutzdatenpaket 5 zusammengefaßt werden und paketorientiert im Mobilfunknetz übertragen werden sollen, werden von der entsprechenden Anwendung zunächst einem Transportschichtprotokoll in einer unterhalb der Anwendungsprotokollschicht 25 liegenden Transportprotokollschicht 30 übergeben. Bekannt sind hier das TCP (Transmission Control Protocol) und das UDP (User Datagram Protocol). Aber es sind auch andere Transportschichtprotokolle oder eine transparente Transportprotokollschicht 30 denkbar, durch die die zu übertragenden Nutzdaten 1 transparent ohne Nutzung eines Transportschichtprotokolls durchgereicht werden. Die Transportprotokollschicht 30 nutzt Dienste eines Netzwerkprotokolls in einer unterhalb der Transportprotokollschicht 30 liegenden Netzwerkprotokollschicht 35. Die Netzwerkprotokolle werden dabei beispielsweise als PDP (Packet Data Protocol = Paketdatenprotokoll) bezeichnet. Die Transportprotokollschicht 30 nutzt die Dienste der PDPs, um die Nutzdaten 1 zu übertragen. Die bekanntesten PDPs der Netzwerkprotokollschicht 35 sind das IP (Internet Protocol) und das X.25-Protokoll. Sowohl die Netzwerk- als auch die Transportprotokolle können den Nutzdaten 1 Kontrolldaten 20 hinzufügen, beispielsweise in Form einer TCP-/IP-Kopfinformation bzw. eines TCP-/IP-Headers. In der Figur fügt die Transportprotokollschicht 30 den Nutzdaten 1 im Nutzdatenpaket 5 eine erste Kopfinformation 10 beispielsweise in Form eines TCP-Headers hinzu. Anschließend fügt die Netzwerkprotokollschicht 35 dem durch die erste Kopfinformation 10 erweiterten Nutzdatenpaket 5 eine zweite Kopfinformation 15, beispielsweise in Form eines IP-Headers hinzu. Unterhalb der Netzwerkprotokollschicht 35 liegen nun die mobilfunksystem- bzw. mobilfunknetz-spezifischen Protokolle. Mit jedem PDP werden Daten über die von dem PDP genutzte Datenverbindung im Mobilfunknetz, beispielsweise in einer Basisstation, und in einem mit dem mit dem Mobilfunknetz kommunizierenden Endgerät des Mobilfunknetzes, beispielsweise in einer Mobilstation, gespeichert. Dabei kann es sich bei der Basisstation um den Sender und bei der Mobilstation um den Empfänger handeln oder umgekehrt. Die gespeicherten Daten können beispielsweise Parameter über die Dienstequalität QOS beinhalten und werden als PDP-Kontext bezeichnet. Es ist möglich, ein PDP gleichzeitig mit verschiedenen Kontexten zu betreiben, wobei sich die Kontexte nur in den Parametern für die Dienstequalität QOS unterscheiden. Es kann also in einem Endgerät ein IP-Protokoll mit einer IP-Adresse einmal mit einem ersten Parameter für die Dienstequalität QOS und einmal mit einem zweiten Parameter für die Dienstequalität QOS betrieben werden. PDP-Kontexte können jedoch auch auf verschiedenen Netzwerkprotokollen basieren. So kann es beispielsweise vorgesehen sein, daß in einem Endgerät drei verschiedene Netzwerkprotokolle laufen: Zwei IP-Protokolle mit unterschiedlicher IP-Adresse und ein X.25-Protokoll.

Die PDP-Kontexte stellen dabei Nutzer einer unterhalb der Netzwerkprotokollschicht 35 liegenden Konvergenzprotokollschicht 40 dar. In der Konvergenzprotkollschicht 40 werden die Nutzdaten 1, die von einem PDP-Kontext kommen, der Übertragung über eine Luftschnittstelle angepaßt, indem die Nutzdaten 1 und/oder die den Nutzdaten 1 zugefügten Kontrolldaten 20 optional komprimiert und evtl. Paketdatenströme von verschiedenen PDP-Kontexten zu einem Paketdatenstrom zusammengesetzt oder gemultiplext werden. Unterhalb der Konvergenzprotokollschicht 40 befindet sich in der Schichtenfolge des beschriebenen Mobilfunksystems eine Verbindungssteuerungsschicht 55, die optional Übertragungsfehler der Luftschnittstelle korrigiert, indem sie auf der Empfängerseite fehlerhafte Pakete wieder anfordert und auf der Senderseite erneut verschickt. Desweiteren sorgt die Verbindungssteuerungsschicht 55 optional dafür, daß die Reihenfolge der Datenpakete bei der Übertragung erhalten bleibt und sie segmentiert die zu übertragenden Datenpakete in sogenannte PDUs (Paket Data Unit), deren Länge den verwendeten Übertragungskanälen angepaßt ist. Die Verbindungssteuerungsschicht 55 nutzt dann die Dienste der darunterliegenden Schichten 60, wozu beispielsweise die MAC-Schicht (Medium Access Control) gehört, um die PDUs zu übertragen. Die MAC-Schicht sorgt dann für den Zugriff auf das eigentliche Übertragungsmedium, wählt geeignete Transportformate aus und multiplext die verschiedenen PDUs auf geeignete Transportkanäle, die in der unter der MAC-Schicht liegenden physikalischen Schicht, die ebenfalls zu den in der Figur mit dem Bezugszeichen 60 gekennzeichneten Schichten unterhalb der Verbindungssteuerungsschicht 55 gehört, auf die zugewiesenen physikalischen Kanäle abgebildet werden. Die beschriebene Schicht- oder Protokollhierarchie ist aus der Veröffentlichung "Radio Interface Protocol Architecture", 3GPP TS 25.301 bekannt. Einige der beschriebenen Schichten, d.h. die physikalische Schicht, die MAC-Schicht, die Verbindungssteuerungsschicht 55 und die Konvergenzprotokollschicht 40 haben auch eine direkte Verbindung zu einer Funkressourcensteuerung RRC (Radio Ressource Control). Diese Verbindung wird genutzt, um Statusinformationen an die Funkressourcensteuerung RRC zu übertragen und der Funkressourcensteuerung RRC eine Konfiguration der anderen Protokolle zu ermöglichen.

Die Kontrolldaten 20, die durch die erste Kopfinformation 10 und die zweite Kopfinformation 15 gebildet werden, sind für das Weiterleiten der Nutzdaten 1 im Mobilfunknetz nötig, wobei dieses Weiterleiten auch als Routing bezeichnet wird. Diese Kontrolldaten 20 umfassen dazu beispielsweise einen sognannten Applikationsdiskriminator zur Unterscheidung der verwendeten Anwendungen, eine Sequenznummer zur Kennzeichnung des Nutzdatenpaketes 5 in der Reihenfolge der vom Sender zum Empfänger zu versendenden Nutzdatenpakete, Netzwerkprotokolladressen des Senders und des Empfängers, beispielsweise in Form von IP-Adressen, einen Protokolldiskriminator zur Unterscheidung verschiedener verwendeter Protokolle, Redundanz zur Fehlererkennung usw. Das auf diese Weise durch die Transportprotokollschicht 30 und die Netzwerkprotokollschicht 35 erzeugte Nutzdatenpaket 5 mit der ersten Kopfinformation 10 und der zweiten Kopfinformation 15 sowie den Nutzdaten 1 wird dann der Konvergenzprotokollschicht 40 übergeben, das nun das Nutzdatenpaket 5 wie beschrieben für die Übertragung über die Luftschnittstelle optimiert, indem es wenn möglich die erste Kopfinformation 10 und/oder die zweite Kopfinformation 15 komprimiert, indem es optional die Nutzdaten 1 komprimiert und indem es ebenfalls optional evtl. mehrere ankommende Paketdatenströme von verschiedenen PDP-Kontexten auf einen abgehenden Paketdatenstrom multiplext.

Die Konvergenzprotokollschicht 40 nutzt dann den von der Verbindungssteuerungsschicht 55 bereitgestellten Dienst in Form von Verbindungen 65, 70, um den erzeugten und gegebenenfalls gemultiplexten Paketdatenstrom über die Luftschnittstelle zu übertragen. Für die Beschreibung der Erfindung soll dabei aus dem zu übertragenden Paketdatenstrom die Übertragung des Nutzdatenpaketes 5 näher betrachtet werden. Die Komprimierung der Kontrolldaten 20 innerhalb der Konvergenzprotokollschicht 40 erfolgt beispielsweise nach der aus der Veröffentlichung "Compressing TCP/IP-Headers for Low Speed Serial Links" RFC 1144 beschriebenen und dort spezifizierten Methode, in der die erste Kopfinformation 10 und die zweite Kopfinformation 15 intercodiert werden. Dabei werden im Sender und im Empfänger die Kontrolldaten 20 des zuletzt übertragenen Nutzdatenpakets 5 gespeichert. Für das nachfolgend zu übertragende Nutzdatenpaket 5 werden dann nur diejenigen Kontrolldaten 20 übertragen, die sich im Vergleich zu den Kontrolldaten 20 des zuletzt übertragenen Nutzdatenpaketes 5 geändert haben. Diese Methode ist deshalb besonders vorteilhaft, weil sich bestimmte Felder der ersten Kopfinformation 10 und der zweiten Kopfinformation 15, wie beispielsweise die IP-Adresse des Senders, der Applikationsdiskriminator und der Protokolldiskriminator bei einer bestehenden Verbindung zwischen Sender und Empfänger nur selten ändern. Die beschriebene Methode ist jedoch auch besonders anfällig gegen unerkannte Übertragungsfehler, die die Kontrolldaten 20 verfälschen, da sich solche Fehler nicht nur auf die den Kontrolldaten 20 zugeordneten Nutzdatenpakete 5 sondern auch auf die danach zu übertragenden Nutzdatenpakete 5 auswirken. Deshalb ist ein besonderer Fehlerschutz für die Kontrolldaten 20 sinnvoll. Bei Ausbildung des Mobilfunknetzes nach dem UMTS-Standard ist die Funktionalität der Komprimierung der ersten Kopfinformation 10 und der zweiten Kopfinformation 15 durch ein sogenanntes Paketdaten-Konvergenzprotokoll PDCP (Packet Data Convergence Protocol) realisiert, das oberhalb der Verbindungssteuerungsschicht 55 in der Konvergenzprotokollschicht 40 liegt. Das PDCP nutzt dabei die Verbindungen 65, 70 der Verbindungssteuerungsschicht 55, um Daten über die Luftschnittstelle zu übertragen.

In einem Mobilfunknetz nach dem GSM-Standard ist hingegen die Funktionalität der Komprimierung der ersten Kopfinformation 10 und der zweiten Kopfinformation 15 durch ein sogenanntes teilnetzabhängiges Konvergenzprotokoll SNDCP (Subnetwerk Dependent Convergence Protocol) in der Konvergenzprotokollschicht 40 realisiert, wobei dem GSM-Mobilfunksystem zur Übertragung von Datenpaketen der sogenannte GPRS (General Packet Radio Service = allgemeiner Datenpaket Funkdienst) zugrundeliegt. Die Verbindungssteuerungsschicht 55 ist beim UMTS-Standard als sogenannte RLC-Verbindungssteuerungsschicht (Radio Link Control) und beim GSM-Standard als sogenannte LLC-Verbindungssteuerungsschicht (Logical Link Control) ausgebildet.

Die Erfindung wird im folgenden beispielhaft anhand des UMTS-Mobilfunknetzes und der dort verwendeten Terminologie ohne Beschränkung der Allgemeinheit beschrieben und ist in entsprechender Weise auf das GSM-Mobilfunksytem und andere Mobilfunksysteme anwendbar.

Erfindungsgemäß ist es nun vorgesehen, unterschiedliche Funkverbindungen vom Sender zum Empfänger und damit unterschiedliche Verbindungen zwischen der Konvergenzprotokollschicht 40 und den unterhalb der Verbindungssteuerungsschicht 55 für die Übertragung der komprimierten Kontrolldaten 20 und den zugeordneten und gegebenenfalls auch komprimierten Nutzdaten 1 vorzusehen. Es ist dann möglich, die Übertragungsqualität QOS (Quality of Service) für die verschiedenen Verbindungen der Verbindungssteuerungsschicht 55 unterschiedlich einzustellen und beispielsweise die Bitfehlerrate für die Kontrolldaten 20 niedriger zu wählen als die Bitfehlerrate für die Nutzdaten 1 und somit für die Kontrolldaten 20 einen höheren Fehlerschutz zu realisieren als für die Nutzdaten 1. Den auf diese Weise getrennt gesendeten Kontrolldaten 20 und Nutzdaten 1 ist dann jeweils eine Zuordnungsinformation 50 hinzuzufügen, die ein eindeutiges Zusammenführen der Nutzdaten 1 und der zugeordneten Kontrolldaten 20 beim Empfänger ermöglicht.

Somit können die Kontrolldaten 20 besser vor Übertragungsfehlern geschützt werden, um die Wahrscheinlichkeit für eine fehlerhafte Weiterleitung der Nutzdatenpakete 5 im Mobilfunknetz möglichst zu verhindern, ohne gleichzeitig auch die Nutzdaten 1 besser schützen zu müssen. Somit werden die Anforderungen an Übertragungsbandbreite für die Übertragung der Kontrolldaten 20 und der Nutzdaten 1 vom Sender zum Empfänger möglichst gering gehalten und dennoch eine fehlerhafte Versendung der Nutzdatenpakete 5 weitestgehend vermieden. Der Fehlerschutz wird dabei durch Verwendung der unterschiedlichen Verbindungen 65, 70 der Verbindungssteuerungsschicht 55 nicht in der Konvergenzprotokollschicht 40 eingefügt, sondern in einer Protokollschicht unterhalb der Konvergenzprotokollschicht 40. Je weiter unterhalb der Konvergenzprotokollschicht 40 der Fehlerschutz innerhalb der Protokollschichtfolge realisiert wird, umso besser kann der Fehlerschutz an die eigentliche Funkverbindung zwischen Sender und Empfänger angepaßt werden. Die Konvergenzprotokollschicht 40 nutzt dabei einfach einen Dienst mit entsprechend niedriger Fehlerwahrscheinlichkeit, der ihr von einer der unterhalb der Konvergenzprotokollschicht 40 angeordneten Schichten 55, 60 angeboten wird.

Gemäß der Figur werden nun in der Konvergenzprotokollschicht 40 durch das dort entsprechend verwendete Konvergenzprotokoll anhand eines Kompressionsalgorithmus 75 komprimiert, so daß die erste Kopfinformation 10 und die zweite Kopfinformation 15 als komprimierte Kontrolldaten 80 vorliegen. Dabei wird die erste Kopfinformation 10 und die zweite Kopfinformation 15 unter Zuhilfenahme einer gespeicherten Datenbasis 85, die unter anderem die zuletzt gesendeten bzw. empfangenen Kontrolldaten 20 enthält, komprimiert. Die Nutzdaten 1 können auch komprimiert werden, wobei dies für die Beschreibung des erfindungsgemäßen Verfahrens nicht relevant ist und daher nicht weiter betrachtet werden soll. Die Verbindungssteuerungsschicht 55 stellt nun die entsprechenden Übertragungskanäle zur Realisierung der ersten Verbindung 65 und der zweiten Verbindung 70 zwischen der Konvergenzprotokollschicht 40 und den unterhalb der Verbindungssteuerungsschicht 55 liegenden Schichten zur Verfügung. Jedem Übertragungskanal ist dabei eine bestimmte Übertragungsqualität QOS zugeordnet, die beim Verbindungsaufbau zwischen dem Sender und dem Empfänger von der Funkressourcensteuerung RRC ausgehandelt wird.

Die komprimierten Kontrolldaten 80 werden nun über einen anderen Übertragungskanal bzw. eine andere Verbindung von der Konvergenzprotokollschicht 40 zu den unterhalb der Verbindungssteuerungsschicht 55 liegenden Schichten 60 übertragen als die zugeordneten Nutzdaten 1. Die erste Verbindung 65 stellt somit einen ersten Übertragungskanal und die zweite Verbindung 70 einen zweiten Übertragungskanal dar. Die komprimierten Kontrolldaten 80 sollen dabei in diesem Beispiel über den ersten Übertragungskanal 65 übertragen werden, wohingegen die Nutzdaten 1 über den zweiten Übertragungskanal 70 übertragen werden sollen. Dabei kann es vorgesehen sein, für den ersten Übertragungskanal 65 eine Übertragungsqualität QOS zu wählen, die die gleiche Übertragungsverzögerung von beispielsweise 100 ms wie der zweite Übertragungskanal 70 aufweist. Der erste Übertragungskanal 65 kann jedoch eine geringere durchschnittliche Bitfehlerrate von beispielsweise 10 - 6 aufweisen als der zweite Übertragungskanal 70 mit einer durchschnittlichen Bitfehlerrate von beispielsweise 10 - 3. Um im Empfänger ein Zusammenführen der Nutzdaten 1 und der Kontrolldaten 20 zu ermöglichen, wird den komprimierten Kontrolldaten 80 und den Nutzdaten 1 bereits in der Konvergenzprotokollschicht 40 jeweils die Zuordnungsinformation 50 hinzugefügt, die die Zuordnung der komprimierten Kontrolldaten 80 zu den Nutzdaten 1 ermöglicht. Somit wird durch die Konvergenzprotokollschicht 40 aus den komprimierten Kontrolldaten 80 und der Zuordnungsinformation 50 ein Kontrolldatenpaket 45 gebildet, das über den ersten Übertragungskanal 65 der Verbindungssteuerungsschicht 55 übertragen wird, und dem in dieser Verbindungssteuerungsschicht 55 durch das dortige Verbindungssteuerungsschichtprotokoll für die Funkübertragung vom Sender zum Empfänger noch eine dritte Kopfinformation 90 hinzugefügt wird. Entsprechend wird das Nutzdatenpaket 5 durch die Konvergenzprotokollschicht 40 auf die Nutzdaten 1 und die Zuordnungsinformation 50 beschränkt und in dieser Form über den zweiten Übertragungskanal 70 in der Verbindungssteuerungsschicht 55 übertragen, wobei dem Nutzdatenpaket 5 in der Verbindungssteuerungsschicht 55 durch das dortige Verbindungssteuerungsschichtprotokoll eine vierte Kopfinformation 95 für die Funkübertragung vom Sender zum Empfänger hinzugefügt wird.

Die beschriebene Anwendung kann beispielsweise auf einem UMTS-Endgerät oder auf einem GSM-Endgerät laufen.

## Patentansprüche

1. Verfahren zum Betreiben eines Mobilfunknet zes, bei dem Nutzdaten (1) in Nutzdatenpaketen (5) übertragen werden und den Nutzdatenpaketen (5) jeweils mindestens eine Kopfinformation (10, 15) mit Kontrolldaten (20) für das Weiterleiten der Nutzdatenpakete (5) im Mobilfunknetz zugeordnet wird, wobei die Kontrolldaten (20) und die Nutzdaten (1) mit unterschiedlichem Fehlerschutz übertragen werden, **dadurch gekennzeichnet, daß** die Nutzdaten (1) in einer Anwendungsprotokollschicht (25) zu den Nutzdatenpaketen (5) zusammengefaßt werden, daß den Nutzdatenpaketen (5) die mindestens eine jeweilige Kopfinformation (10, 15) in einer Transportprotokollschicht (30) und/oder Netzwerkprotokollschicht (35) zugeordnet wird, daß die Kontrolldaten (20) der mindestens einen Kopfinformation (10, 15) in einer Konvergenzprotokollschicht (40) komprimiert werden, daß die Kontrolldaten (20) der mindestens einen Kopfinformation (10, 15) jeweils als Kontrolldatenpaket (45) über eine andere Funkverbindung im Mobilfunknetz übertragen werden, als das zugehörige Nutzdatenpaket (5) und daß mit dem jeweiligen Kontrolldatenpaket (45) und dem zugeordne ten Nutzdatenpaket (5) jeweils eine Zuordnungsinformation (50) übertragen wird, anhand der das jeweilige Kontrolldatenpaket (45) beim Empfänger mit dem zugeordneten Nutzdatenpaket (5) zusammengeführt wird.

2. Verfahren nach Anspruch 1, **dadurch gekennzeichnet, daß** die Kontrolldaten (20) komprimiert übertragen werden.

3. Verfahren nach Anspruch 2, **dadurch gekennzeichnet, daß** als Kompressionsverfahren eine Interkodierung verwendet wird, bei der im Sender und Empfänger die Kontrolldaten (20) des zuletzt übertragenen Nutzdatenpa kets (5) gespeichert werden und für das nachfolgend zu übertragende Nutzdatenpaket (5) nur diejenigen Kontrolldaten (20) übertragen werden, die sich im Vergleich zu den Kontrolldaten (20) des zuletzt übertragenen Nutzdatenpaketes (5) geändert haben.

4. Verfahren nach Anspruch 1, 2 oder 3, **dadurch gekennzeichnet, daß** der Fehlerschutz für die Kontrolldaten (20) höher gewählt wird als für die Nutzdaten (1).

5. Verfahren nach einem der vorherigen Ansprüche, **dadurch gekennzeichnet, daß** der Fehlerschutz für die zu sendenden Kontrolldaten (20) in einer Protokollschicht (55, 60) unterhalb der Konvergenzprotokollschicht (40) durchgeführt wird.

## Claims

1. Method of operating a mobile radio network in which user data (1) are transmitted in user data packets (5) and the user data packets (5) are respectively assigned at least one item of header information (10, 15) with control data (20) for passing on the user data packets (5) in the mobile radio network, the control data (20) and the user data (1) being transmitted with different error protection, **characterized in that** the user data (1) are combined in an application protocol layer (25) to form the user data packets (5), **in that** the user data packets (5) are assigned the at least one respective item of header information (10, 15) in a transport protocol layer (30) and/or network protocol layer (35), **in that** the control data (20) of the at least one item of header information (10, 15) are compressed in a convergence protocol layer (40), **in that** the control data (20) of the at least one item of header information (10, 15) are respectively transmitted as a control data packet (45) via a different radio link in the mobile radio network than the associated user data packet (5) and **in that**, with the respective control data packet (45) and the assigned user data packet (5) there is respectively transmitted an item of assignment information (50), on the basis of which the respective control data packet (45) is brought together with the assigned user data packet (5) on the receiver side.

2. Method according to Claim 1, **characterized in that** the control data (20) are transmitted in compressed form.

3. Method according to Claim 2, **characterized in that** an intercoding is used as the compression method, in which intercoding the control data (20) of the last-transmitted user data packet (5) are stored in the transmitter and receiver and only those control data (20) which have changed in comparison with the control data (20) of the last-transmitted user data packet (5) are transmitted for the user data packet (5) to be transmitted next.

4. Method according to Claim 1, 2 or 3, **characterized in that** the error protection is chosen to be higher for the control data (20) than for the user data (1) .

5. Method according to one of the preceding claims, **characterized in that** the error protection for the control data (20) to be sent is carried out in a protocol layer (55, 60) below the convergence protocol layer (40).

## Revendications

1. Procédé d'exploitation d'un réseau de téléphonie mobile dans lequel les données utiles (1) sont transférées en paquets de données utiles (5) et au moins une information d'en-tête (10, 15) avec des données de contrôle (20) pour la transmission des paquets de données utiles (5) dans le réseau de téléphonie mobile est attribuée aux paquets de données utiles (5), les données de contrôle (20) et les données utiles (1) étant transférées avec des protections d'erreurs différentes,
**caractérisé en ce que**
les données utiles (1) sont regroupées en paquets de données utiles (5) dans une interface de protocole d'application (25), au moins une des informations d'en-tête est associée aux paquets de données utiles (5) dans une interface de protocole de transport (30) et/ou une interface de protocole de réseau (35), les données de contrôle (20) d'au moins une des informations d'en-tête (10, 15) est compressée dans une interface de protocole de convergence (40), les données de contrôle (20) d'au moins une des informations d'en-tête (10, 15) sont transférées à chaque fois dans le réseau de téléphone mobile en tant que paquet de données de contrôle (45) via une autre liaison hertzienne que le paquet de données utiles correspondant (5), et une information d'association (50) est transmise avec le paquet de données de contrôle (45) correspondant et avec le paquet de données utiles (5) associé, information permettant d'amener le paquet de données de contrôle (45) correspondant au destinataire avec le paquet de données utiles (5) associé.

2. Procédé selon la revendication 1,
**caractérisé en ce que**
les données de contrôle (20) sont compressées avant d'être transférées.

3. Procédé selon la revendication 2,
**caractérisé en ce qu'**
on utilise comme procédé de compression un intercodage pour lequel les données de contrôle (20) du dernier paquet de données utiles (5) transmis sont enregistrées dans l'expéditeur et le destinataire, et pour lequel seules les données de contrôle qui ont été modifiées par rapport aux données de contrôle (20) du dernier paquet de données utiles (5) transféré sont transmises pour le paquet de données utiles (5) suivant à transférer.

4. Procédé selon la revendication 1, 2 ou 3,
**caractérisé en ce que**
la protection d'erreurs sélectionné pour les données de contrôle (20) est plus élevée que pour les données utiles (1).

5. Procédé selon l'une des revendications précédentes,
**caractérisé en ce que**
la protection d'erreurs pour les données de contrôle (20) à envoyer se produit dans une interface de protocole (55, 60) en dessous de l'interface de protocole de convergence (40).
